# EUROPEAN PATENT APPLICATION

(11) **EP 4 752 808 A1**
(43) Date of publication of application: **03.06.2026**
(21) Application number: 25218503.8
(22) Date of filing: 25.11.2025
(51) Int. Cl.: G06Q 20/20, G06Q 20/32, G07G 1/00, G07G 1/14

(54) **AUTOMATED CART-TO-TERMINAL TRANSACTION TRANSFERS**

(30) Priority: 27.11.2024 US 202418963080
(71) Applicant: NCR Voyix Corporation, Atlanta, GA 30308 (US)
(72) Inventor: DEERIN, Joseph Hetherington, Atlanta, GA (US); BRITT, Judea, Atlanta, GA (US); GARDNER, Noah Tyler, Dacula, GA (US); GARCIA-GREEN, Jennifer Ann, Atlanta, GA (US); MORGAN, Kip Oliver, Atlanta, GA (US)
(74) Representative: Secerna LLP

(57) **Abstract**

Methods and a system for automated transaction transfer using radio frequency identification (RFID)-enabled shopping carts and self-checkout terminals. The system comprises an RFID tag attached to each shopping cart that uniquely identifies the cart, and RFID readers positioned near self-checkout terminals. As customers scan items using mobile devices or smart cart systems, the transaction builds on a central server. When a cart approaches an open self-checkout terminal, the system automatically detects the cart's presence through its RFID tag and seamlessly transfers the transaction to the terminal for payment completion. This increases checkout efficiency and throughput, reduces shrinkage risk, and improves the customer experience without requiring items to be removed from the cart.

## Description

### Background

Smart cart and mobile shopping technologies enable customers to scan items while shopping, but retailers face significant challenges with the checkout process. Current methods require customers to either pay directly through the cart (which increases theft risk and reduces impulse purchases) or use cumbersome manual processes to transfer their transaction to a checkout terminal. Traditional solutions involving QR codes, manual entry of transaction IDs, or removing items for radio frequency identification (RFID) scanning are time-consuming, error-prone, and diminish the efficiency benefits of in-aisle scanning technology.

### Summary

According to a first aspect of the present invention there is provided a method, comprising:
receiving, at a server, a request from a mobile device to initiate a transaction; linking, by the server, the mobile device to a cart based on a cart identifier associated with the cart;
receiving, at the server, scanned item data from the mobile device;
adding, by the server, item details associated with the scanned item data to a transaction;
receiving, at the server, the cart identifier from a self-checkout (SCO) terminal responsive to detection of the cart identifier from a radio frequency identification (RFID) tag on the cart when the cart is within a defined range of the SCO terminal;
providing, by the server to the SCO terminal, the transaction associated with the cart identifier;
updating, by the server, a status of the transaction to indicate transfer to the SCO terminal; and
enabling completion of payment for the transaction at the SCO terminal.

Aptly, linking comprises receiving a scanned quick response (QR) code from the mobile device, the QR code corresponding to the cart identifier.

Aptly, linking comprises automatically receiving the RFID tag from the mobile device when an RFID reader of the mobile device detects the RFID tag, the RFID tag corresponding to the cart identifier.

Aptly, receiving the cart identifier comprises reading the RFID tag within a defined x and y coordinate space in proximity of the SCO terminal.

Aptly, receiving the cart identifier comprises reading the RFID tag using an RFID reader positioned overhead of the SCO terminal or positioned proximate to the SCO terminal.

Aptly, updating comprises claiming the transaction for the SCO terminal.

Aptly, wherein enabling comprises causing transaction details for the transaction to be presented simultaneously on both the mobile device and the SCO terminal.

Aptly, enabling comprises receiving item modifications from an interface of the mobile device while the cart is at the SCO terminal.

Aptly, the method further comprises receiving, at the server, loyalty account information in connection with the request to initiate the transaction.

Aptly, the method further comprises automatically initiating payment using payment information associated with a loyalty account.

Aptly, the method further comprises causing a display on one or more of the SCO terminal or the mobile device of an indication of where to position the cart for transaction transfer.

According to a second aspect of the present invention there is provided a method, comprising:
receiving a cart identifier from a radio frequency identification (RFID) tag attached to a cart located at a self-checkout (SCO) terminal;
providing transaction data associated with the cart identifier to the SCO terminal, wherein the transaction data includes items scanned using a mobile device linked to the cart identifier;
causing the transaction data to be presented on a display of the SCO terminal; and
updating a status of a transaction indicating the transaction was transferred for completion and payment on the SCO terminal.

Aptly, receiving comprises detecting the RFID tag using an RFID reader positioned to define a specific detection zone in which the cart is located.

Aptly, receiving comprises automatically detecting the RFID tag using an RFID reader when the cart enters a predefined range of the SCO terminal.

Aptly, providing comprises causing a real-time synchronized view of the transaction data to be presented on the mobile device and on the SCO terminal.

Aptly, updating comprises confirming the payment for the transaction is provided through the mobile device and informing the SCO terminal of the payment to complete a self-checkout at the SCO terminal.

Aptly, the method further comprises receiving item modifications for the transaction through the SCO terminal before processing the payment.

Aptly, the method further comprises receiving item modifications for the transaction through the mobile device before processing the payment.

According to a third aspect of the present invention there is provided a system, comprising:
a radio frequency identification (RFID) tag storing a unique cart identifier, wherein the RFID tag is affixed to a cart;
an RFID reader positioned proximate to a self-checkout (SCO) terminal and configured to detect the RFID tag within a defined range of the SCO terminal;
the SCO terminal comprising:
   a processor;
   a display; and
   a memory storing instructions that, when executed by the processor, cause the SCO terminal to:
      receive transaction data associated with the unique cart identifier from a server;
      display the transaction data; and
      process payment for a transaction; and
the server comprising:
   a processor; and
   a memory storing instructions that, when executed by the processor, cause the server to:
      receive a transaction initiation from a mobile device;
      link the mobile device to the cart using the unique cart identifier;
      build a transaction by receiving scanned item data from the mobile device;
      store the transaction data associated with the unique cart identifier;
      update a status of the transaction when the unique cart identifier is detected;
      transfer the transaction data to the SCO terminal; and
      enable completion of the transaction at the SCO terminal.

Aptly, the RFID reader is positioned above the SCO terminal or affixed to a surface of the SCO terminal, wherein the RFID reader is configured to detect the RFID tag within specific x and y coordinates mapped to an outlined area adjacent to the SCO terminal.

### Brief Description of the Drawings

FIG. 1A is a diagram of a system for automated cart-to-terminal transaction transfers, according to an example embodiment.
FIG. 1B is pictorial diagram depicting a shopping journey that utilizes the system of FIG. 1A, according to an example embodiment.
FIG. 2 is a flow diagram of a method for automated cart-to-terminal transaction transfers, according to an example embodiment.
FIG. 3 is a flow diagram of another method for automated cart-to-terminal transaction transfers, according to an example embodiment.

### Detailed Description

Retailers are increasingly adopting smart cart and mobile shopping technologies that allow customers to scan items while shopping in the aisles. However, these technologies present significant challenges at checkout. Many retailers prefer customers complete payment at designated checkout locations rather than directly through smart carts or mobile devices, as in-aisle payments increase theft risks, reduce opportunities for impulse purchases at checkout, and make it harder for store attendants to monitor transactions from a central location.

Current methods for transferring in-progress transactions to checkout terminals are inefficient and problematic. Solutions that display barcodes or QR codes on smart cart screens require manual scanning by store personnel or customers and necessitate additional scan gun hardware installation at checkout terminals. Systems requiring manual entry of transaction IDs through on-screen keyboards are time-consuming and prone to errors, significantly slowing down checkout lines.

While radio frequency identification (RFID) technology offers potential solutions, traditional implementations have focused on tagging individual items. This approach requires customers to remove all items from their carts for scanning - a process that negates the time-saving benefits of in-aisle scanning technology. Additionally, placing RFID tags on individual items is significantly more expensive and labor-intensive than alternative approaches, making it impractical for many retailers.

In an embodiment presented herein, a unique RFID tag is attached to each shopping cart or shopping basket, with RFID readers positioned near self-checkout (SCO) terminals. As customers scan items using mobile devices or smart cart systems during their shopping journey, the transaction information accumulates on a central server accessible by both the cart and store terminals. Item details for the transaction appear on the display of the mobile devices or smart cart systems during the shopping journey for review by the customer.

The techniques presented herein enable automatic detection when a cart or basket enters the self-checkout area through its RFID tag. In an embodiment, when a customer positions their cart within range of an open SCO terminal, the system seamlessly transfers the transaction to the terminal without requiring manual intervention. This embodiment maintains the efficiency gains of in-aisle scanning while addressing retailer concerns about shrinkage and checkout control. The presented technique increases throughput at checkout compared to traditional barcode or QR code-based transfer methods, while enabling retailers to maintain centralized payment processing for better security and sales optimization.

As used herein, the usage of the terms "cart" and "basket" may be used synonymously and interchangeably. That is, a cart can be a basket and a basket can be a cart. Furthermore, the usage of the terms "shopper," "customer," "consumer," and "user" may be used synonymously and interchangeably. This is an individual who is on a shopping journey within a store and shopping via a cart and a mobile device or smart cart system.

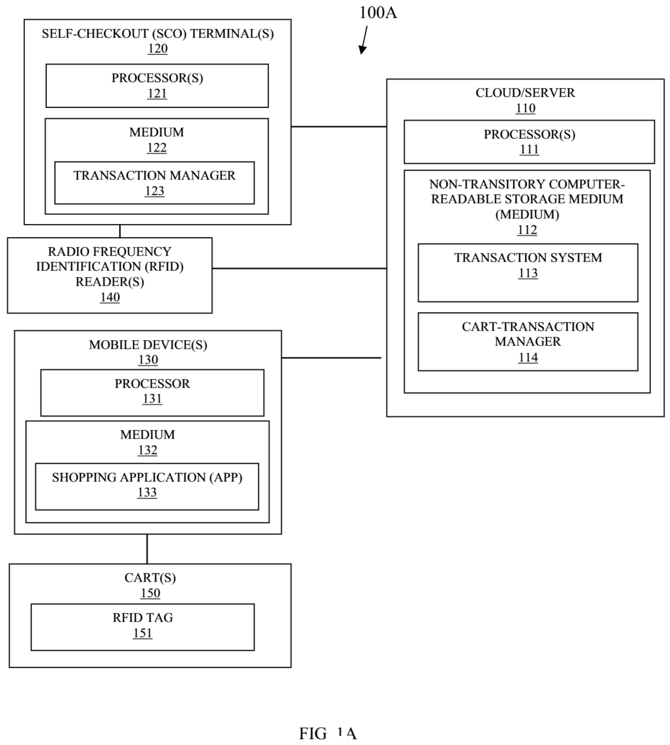

FIG. 1A is a diagram of a system 100A for automated cart-to-terminal transaction transfers, according to an example embodiment. Notably, the components are shown schematically in greatly simplified form, with only those components relevant to understanding of the embodiments being illustrated.

Furthermore, the various components (that are identified in system/platform 100A) are illustrated and the arrangement of the components are presented for purposes of illustration only. It is to be noted that other arrangements with more or less components are possible without departing from the teachings of providing automated cart-to-terminal transaction transfers, presented herein and below.

System 100A includes a cloud or server 110, one or more SCO terminals 120, and one or more mobile devices 130. System 100A further includes one or more RFID readers 140 and carts 150 with affixed RFID tags 151.

Cloud 110 includes at least one processor 111 and a non-transitory computer-readable storage medium 112 (medium), which includes instructions for a transaction system 113 and a cart-transaction manager 114. The instructions when executed by the processor 111 cause the processor 111 to perform operations discussed herein and below with respect to transaction system 113 and cart-transaction manager 114.

Each SCO terminal 120 includes at least one processor 121 and a medium 122, which includes instructions for a transaction manager 123. The instructions when executed by the processor 121 cause the processor 121 to perform the operations discussed herein and below with respect to transaction manager 123.

Each mobile device 130 includes at least one processor 131 and a medium 132, which includes instructions for a shopping application (app) 133. The instructions when executed by the processor 131 cause the processor 131 to perform the operations discussed herein and below with respect to app 133.

In an embodiment, mobile device 130 can include a customer's phone or a store-issued tablet device that affixes to a store cart 150 as part of a smart cart system. The mobile device 130 is operated by a customer during a shopping journey to a store. The customer interacts with a user interface (UI) of the shopping app 133 to perform in-aisle shopping during the journey and place desired items picked from the store shelves and displays into the cart.

The cart150 is equipped with an RFID tag 151 that identifies a unique cart identifier for a given store. In an embodiment, the RFID tag 151 is capable of being removed from one cart 150 and affixed to another cart 150. Thus, any given cart 150 with an RFID tag 151 is assigned a unique cart identifier based on the RFID tag 151 affixed to the cart 150.

In an embodiment, a quick response (QR) code is affixed and a label to the cart 150. The QR code is pre-linked to the RFID tag 151 of the cart 150. In an embodiment, the QR code is removable and affixed to a different cart 150 when the corresponding linked RFID tag 151 is moved and affixed to the different cart 150. In an embodiment, the linkage associated with the QR code is changed to a different RFID tag 151 when the RFID tag 151 originally affixed to the cart 150 is replaced with a different affixed RFID tag 151 to the cart 150. In this way, when a QR code is affixed to a cart 150, the QR code is directly linked to the specific RFID tag 151 and a corresponding unique cart identifier.

During operation of system 100A, the mobile device 130 and corresponding shopping app 133 are linked to a unique cart identifier when a customer's shopping journey is initiated and the customer acquires a cart 150 for shopping within a store. This can be done in a variety of manners.

In one instance, the customer utilizes a built-in camera or barcode scanner of the mobile device 130 to scan a QR code affixed to the cart 150. Shopping app 133 interacts with cart-transaction manager 114 to report the QR code and to initiate a transaction for the customer's shopping journey within the store. Cart-transaction manager 114 links the information associated with the QR code to a specific RFID tag 151 affixed to the customer's cart and provides a unique cart identifier to link to the transaction to transaction system 113. In an embodiment, when the mobile device 130 is a smart cart device that says with the cart, the linkage between the cart and the smart cart device can be established before a customer takes possession of the cart for a shopping journey, such that when the customer starts a transaction, the transaction is linked to the RFID tag 151 automatically.

In another instance, the mobile device 130 includes its own integrated RFID reader such that when the shopping app 133 is initiated for a transaction by the customer, the mobile device 130 reads the RFID tag 151 automatically. The shopping app 133 reports the RFID tag 151 to cart-transaction manager 114 and cart-transaction manager 114 provides a unique cart identifier to link to the transaction to transaction system 113.

In an embodiment, the UI of shopping app 133 permits the customer to scan a loyalty card or enter a loyalty identifier. Shopping app 133 reports the loyalty information to transaction system 113 to associate the transaction of the customer with the customer's loyalty account.

When the customer enters or links their loyalty account to the transaction and they have a preferred payment method registered to their account, this payment information becomes available for streamlined checkout. The customer can later simply confirm payment with their registered card when completing the transaction at the SCO terminal 120.

The customer continues their shopping via aisles of the store by using the mobile device 130 and shopping app 133 to scan and enter item codes for their transaction and placing desired items in the cart 150. Shopping app 133 reports each item code to transaction system 113 and item details and item information is returned to the shopping app 133. The item details and item information are displayed within the UI of the shopping app 133 to the customer during the shopping journey. This allows the customer to see a running total of items being purchased and a running price total for their ongoing transaction. Transaction system 113 maintains the details of the transaction during the customer's journey.

In an embodiment, when the mobile device 130 is the customer's phone, the phone can use vision capabilities or a barcode scanner to identify the items that the customer puts in the cart 150 during shopping. This provides flexibility in how items are identified and added to the transaction.

In an embodiment, shopping app 133 uses an integrated camera of mobile device 130 to perform item vision recognition of items being placed in the cart 150 by the customer. In an embodiment and when the mobile device 130 includes an RFID reader and when the items include RFID tags, shopping app 133 automatically records item codes entered into the cart based on automatically reading item RFID tags.

Once the customer is ready for checkout at a SCO terminal 120, the customer pushes the cart 150 to the store area associated with self-checkouts. Each SCO terminal 120 is associated with a specific RFID reader 140. The RFID reader 140 can be affixed to an outside service of the SCO terminal 120, affixed to a ceiling above the SCO terminal 120, or affixed to a surface that is adjacent or proximate to the SCO terminal 120. Newer RFID readers can have a range of between 10-20 feet, which provides sufficient coverage for detecting carts approaching the checkout area.

In an embodiment, the RFID reader 140 is programmable such that the antennas of the RFID reader 140 are programmed to look for RFID tags 151 of carts within a specific defined area in front of the SCO terminal 120. In an embodiment, the specific defined area is a range of x and y coordinate space. In an embodiment, the defined area is enclosed or outlined by tape or paint on the floor in front of the SCO terminal 120 so that the customer can clearly see where the customer needs to place their cart 150.

As soon as the RFID reader 140 identifies the RFID tag 151 of the customer's cart 150, the unique cart identifier associated with the RFID tag 151 is obtained by either transaction manager 123 or cart-transaction manager 114. In the case of the unique cart identifier being received by the transaction manager 123, the unique cart identifier is reported to transaction system 113. In the case of the unique cart identifier being received by cart-transaction manager 114, cart transaction manager 114 reports a SCO identifier for the SCO terminal 120 and the unique cart identifier to transaction system 113. The RFID reader 140 is linked and mapped to the specific SCO terminal 120 such that cart-transaction manager 114 can quickly identify and provide the SCO identifier to the transaction system 113.

This identification of the unique cart identifier is automatic requiring no affirmative actions of the customer other than the customer placing the cart 150 within a predefined range of the corresponding RFID reader 140 associated with the SCO terminal 120. The customer merely has to wheel the cart 150 up to the SCO terminal 120 for self-checkout of the transaction. In addition, if there were logs of SCO terminals 120 in close quarters there could optionally be a button on the screen to activate the RFID detection after the cart is in place adjacent to a corresponding SCO terminal 120.

Once transaction system 113 has the unique cart identifier and the SCO identifier for the SCO terminal 120, transaction system 113 transmits the transaction and item details for the customer's transaction directly to transaction manager 123. This causes transaction manager 123 to present within a transaction interface of the SCO terminal 120 the details for review by the customer.

At this point in time, the customer can operate the transaction interface of the SCO terminal 120 or operate the UI of the shopping app 133 to remove items from the item list of the transaction and/or add last minute items to the transaction. When the customer utilizes the UI of the shopping app 133, the item changes are sent to transaction system 113 and relayed back to transaction manager 123 causing the transaction and item details presented within the transaction interface to automatically update and synchronize with the transaction and item details presented within the UI of shopping app 133. When the customer utilizes the transaction interface of transaction manager 123, item changes are sent to transaction system 113 and relayed back to shopping app 133 causing the transaction and item details presented within transaction interface to automatically update and synchronize within the UI of the shopping app 133.

Once the customer is prepared to provide payment to complete the transaction and self-checkout, the customer either selects a proceed to payment option within the transaction interface of the SCO terminal 120 or within the UI of the shopping app 133. In the case where the customer has linked their loyalty account to the transaction and has a registered preferred payment method, one or both of the transaction interface of the SCO terminal 120 and the UI of the shopping app 133 presents a confirm payment via the registered payment method. In the case where the customer confirms payment via the UI of the shopping app 133, transaction system 113 sends a payment confirmed indication back to transaction manager 123 causing the transaction interface to end the transaction and print a receipt for the customer.

In an embodiment, the customer may also pay via a non-registered payment method via either the transaction interface of the SCO terminal 120 or via the UI of the shopping app 133. When the customer pays via the transaction interface of the SCO terminal, the transaction interface instructs the customer to insert a payment card into a card reader of the SCO terminal 120. When the customer pays via the UI of the shopping app 133, the UI instructs the customer to enter the payment card into the card reader of the SCO terminal 120, take a picture of the payment card using mobile device 130, or enter the card information via input fields of the UI for the shopping app 133.

In an embodiment, when the unique cart identifier is linked to the customer's transaction, the transaction interface of the SCO terminal 120 includes an interface option that indicates select this option to automatically transfer your transaction details for checkout at this SCO terminal 120. So, in addition to the automatic transfer of transaction details, which was discussed above, the customer can affirmative select a transaction interface option to initiate the transfer of the transaction details from transaction system 113 to the transaction manager 123 of SCO terminal 120. This can be useful if the customer wants to add or remove items using the shopping app 133 before selecting the transfer option at the SCO terminal 120.

In an embodiment, the transaction system 113 is located on a separate store or retail server, which interacts with cart-transaction manager 114 to link a transaction to a unique cart identifier and to identify the unique cart identifier when a customer's cart 150 is proximate to a specific SCO terminal 120. In an embodiment, the processing operations of the cart-transaction manager 114 is subsumed into the processing of the transaction system 113.

The techniques presented herein significantly improve the efficiency of the checkout process. By enabling automatic transaction transfer and allowing items to remain in the cart during checkout, the total transaction time associated with the checkout process is decreased by approximately 50% compared to traditional checkout techniques. In an embodiment, the customer places items within bags during their shopping journey. The bags are in the cart 150, as a result once payment is received, the customer's items are already bagged and can exit the store with the bags or with the cart 150 having the bags as needed.

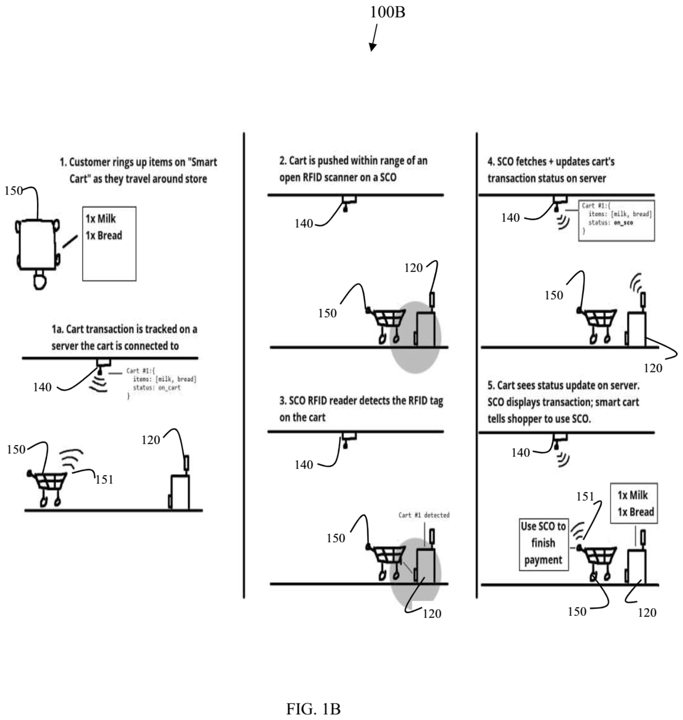

FIG. 1B is pictorial diagram depicting a shopping journey 100B that utilizes the system of FIG. 1A, according to an example embodiment. At 1a, the cart 150 with the RFID tag 151 is linked to the customer transaction via shopping app 133, transaction system 113, and/or cart-transaction manager 114. At 1, the customer shops for items within the store and the items are recorded in the transaction via shopping app 133 and transaction system 113.

At 2, the customer pushes the cart 150 within range of an RFID reader 140 of a SCO terminal 120 for self-checkout. At 3, the RFID tag 151 is read by RFID reader 140 and reported to or obtained by transaction system 113. At 4, the transaction system 113 provides the transaction details to the SCO terminal 120 and updates a status of the transaction to indicate the transaction was transferred to the SCO terminal 120 for completion and payment processing. At 5, the shopping app 133 sees the status change and, optionally, instructs the customer via the UI to finish the transaction and provided payment via the transaction interface of the SCO terminal 120.

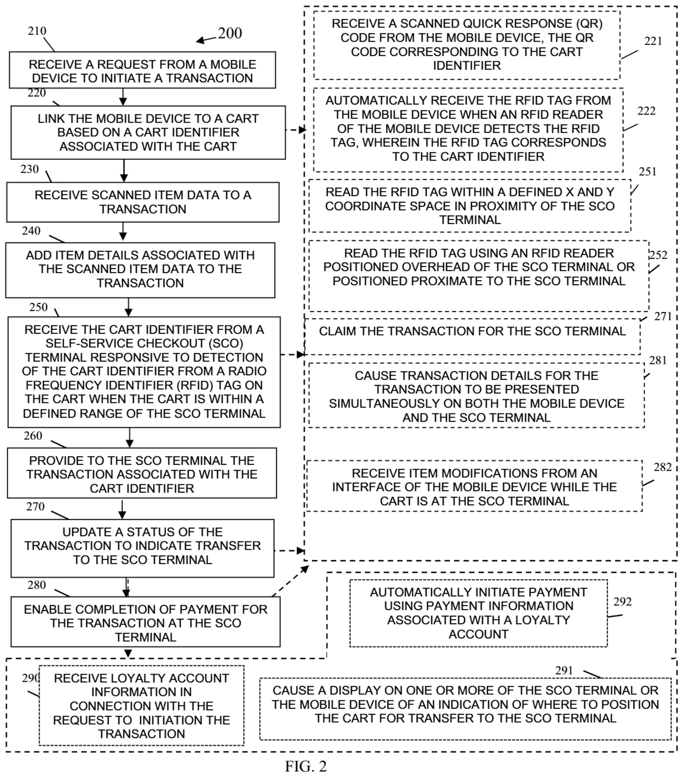

The above-referenced embodiments and other embodiments are now discussed within FIGS. 2-3. FIG. 2 is a flow diagram of a method 200 for automated cart-to-terminal transaction transfers, according to an example embodiment. The software module(s) that implements the method 200 is referred to as a "cart-to-terminal transaction transfer manager." The cart-to-terminal transaction transfer manager is implemented as executable instructions programmed and residing within memory and/or a non-transitory computer-readable (processor-readable) storage medium and executed by one or more processors of one or more devices. The processor(s) of the device that executes the cart-to-terminal transaction transfer manager are specifically configured and programmed to process the cart-to-terminal transaction transfer manager. The cart-to-terminal transaction transfer manager may have access to one or more network connections during its processing. The network connections can be wired, wireless, or a combination of wired and wireless.

In an embodiment, the device that executes the cart-to-terminal transaction transfer manager is cloud 110, a store server, or a retail server. In an embodiment, the cart-to-terminal transaction transfer manager is all or some combination of transaction system 113, cart-transaction manager 114, transaction manager 123, and/or shopping app 133.

At 210, the cart-to-terminal transaction transfer manager receives a request from a mobile device 130 to initiate a transaction. The initiation is received via a UI of shopping app 133.

At 220, the cart-to-terminal transaction transfer manager links the mobile device 130 to the cart 150 based on a cart identifier associated with the cart 150. In an embodiment, at 221, the cart-to-terminal transaction transfer manager receives a scanned QR code from the mobile device 130. The QR code corresponding to the cart identifier. In an embodiment, at 222, the cart-to-terminal transaction transfer manager automatically receives an RFID tag 151 from the mobile device 130 when an RFID reader of the mobile device 130 detects the RFID tag 151. The RFID tag corresponds to the cart identifier.

At 230, the cart-to-terminal transaction transfer manager receives scanned item data to a a transaction. The scanned item data is receiving from the mobile device 130. Items associated with the scanned item data are placed in the cart 150 by the customer.

At 240, the cart-to-terminal transaction transfer manager adds item details associated with the scanned item data to the transaction. At 250, the cart-to-terminal transaction transfer manager receives the cart identifier from a SCO terminal 120 responsive to detection of the cart identifier from an RFID tag 151 on the cart 150 when the cart 150 is within a predefined range of the SCO terminal 120. In an embodiment, at 251, the cart-to-terminal transaction transfer manager reads the RFID tag within a defined x and y coordinate space located in proximity to the SCO terminal 120. In an embodiment, at 252, the cart-to-terminal transaction transfer manager reads the RFID tag using an RFID reader 140 positioned overhead of the SCO terminal 120 or positioned proximate to the SCO terminal 120.

At 260, the cart-to-terminal transaction transfer manager provides to the SCO terminal 120 the transaction associated with the cart identifier. At 270, the cart-to-terminal transaction transfer manager updates a status of the transaction to indicate transfer of the transaction to the SCO terminal 120 for completion. In an embodiment, at 271, the cart-to-terminal transaction transfer manager claims the transaction for the SCO terminal 120, which means that the SCO terminal 120 now has ownership of the transaction for transaction completion at the SCO terminal 120.

At 280, the cart-to-terminal transaction transfer manager enables completion of payment for the transaction at the SCO terminal 120. In an embodiment, at 281, the cart-to-terminal transaction transfer manager causes transaction details for the transaction to be presented simultaneously on both the mobile device 130 and the SCO terminal 120. In an embodiment, at 282, the cart-to-terminal transaction transfer manager receives item modifications from an interface of the mobile device 130 while the cart 150 is at the SCO terminal 120.

In an embodiment, at 290, the cart-to-terminal transaction transfer manager receives loyalty account information in connection with the request to initiate the transaction. The loyalty account is linked to the transaction.

In an embodiment, at 291, the cart-to-terminal transaction transfer manager causes a display on one or more of the SCO terminal 120 or the mobile device 130 of an indication. The indication indicates where to position the cart relative to the SCO terminal 120 for transfer of the transaction details to the SCO terminal 120. In an embodiment, the transaction interface of the SCO terminal 120 presents a transaction transfer option to the customer which when selected performs the transfer of the transaction details to the SCO terminal 120.

In an embodiment, at 292, the cart-to-terminal transaction transfer manager automatically initiates payment for the transaction using payment information associated with a loyalty account of the customer. This is a situation where the customer linked their loyalty account to the transaction and the loyalty account includes a registered payment method of the customer.

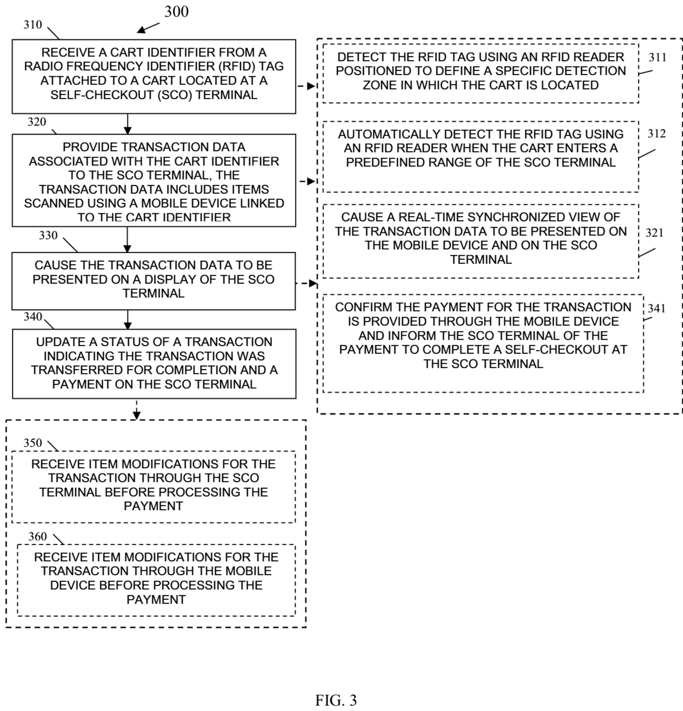

FIG. 3 is a diagram of another method 300 for automated cart-to-terminal transaction transfers, according to an example embodiment. The software module(s) that implements the method 300 is referred to as a "transaction transfer manager." The transaction transfer manager is implemented as executable instructions programmed and residing within memory and/or a non-transitory computer-readable (processor-readable) storage medium and executed by one or more processors of a device. The processors that execute the transaction transfer manager are specifically configured and programmed for processing the transaction transfer manager. The transaction transfer manager may have access to one or more network connections during its processing. The network connections can be wired, wireless, or a combination of wired and wireless.

In an embodiment, the device that executes the transaction transfer manager is cloud 110, a store server, of a retail server. In an embodiment, the transaction transfer manager is all or some combination of transaction system 113, cart-transaction manager 114, transaction manager 123, shopping app 133, and/or method 200. The transaction transfer manager represents another and, in some ways, an enhanced processing perspective from that which was shown in method 200.

At 310, the transaction transfer manager receives a cart identifier from an RFID tag 151 attached to a cart 150. The cart is located at or proximate to an SCO terminal 120. In an embodiment, at 311, the transaction transfer manager detects the RFID tag 151 using an RFID reader 140 positioned to define a specific detection zone in which the cart 150 is located proximate to the SCO terminal 120. In an embodiment, at 312, the transaction transfer manager automatically detects the RFID tag 151 using an RFID reader 140 when the cart 150 enters a predefined range of the SCO terminal 120.

At 320, the transaction transfer manager provides transaction data associated with the cart identifier to the SCO terminal 120. The transaction data includes items scanned using a mobile device 130 linked to the cart identifier. In an embodiment, at 321, the transaction transfer manager causes a real-time synchronized view of the transaction data to be presented on the mobile device 130 and on the SCO terminal 120.

At 330, the transaction transfer manager causes the transaction data to be presented on a display of the SCO terminal 120. At 340, the transaction transfer manager updates a status of the transaction indicating the transaction was transferred for completion of a payment on the SCO terminal 120. In an embodiment, at 341, the transaction transfer manager confirms the payment for the transaction is provide through the mobile device 130. The transaction transfer manager informs the SCO terminal 120 of the payment to complete a self-checkout at the SCO terminal 120.

In an embodiment, at 350, the transaction transfer manager receives item modifications for the transaction through the SCO terminal 120 before processing the payment. In an embodiment, at 360, the transaction transfer manager receives item modifications for the transaction through the mobile device 130 before processing the payment.

It should be appreciated that where software is described in a particular form (such as a component or module) this is merely to aid understanding and is not intended to limit how software that implements those functions may be architected or structured. For example, modules are illustrated as separate modules, but may be implemented as homogenous code, as individual components, some, but not all of these modules may be combined, or the functions may be implemented in software structured in any other convenient manner.

Furthermore, although the software modules are illustrated as executing on one piece of hardware, the software may be distributed over multiple processors or in any other convenient manner.

The above description is illustrative, and not restrictive. Many other embodiments will be apparent to those of skill in the art upon reviewing the above description. The scope of embodiments should therefore be determined with reference to the appended claims, along with the full scope of equivalents to which such claims are entitled.

In the foregoing description of the embodiments, various features are grouped together in a single embodiment for the purpose of streamlining the disclosure. This method of disclosure is not to be interpreted as reflecting that the claimed embodiments have more features than are expressly recited in each claim. Rather, as the following claims reflect, inventive subject matter lies in less than all features of a single disclosed embodiment. Thus, the following claims are hereby incorporated into the Description of the Embodiments, with each claim standing on its own as a separate exemplary embodiment.

Throughout the description and claims of this specification, the words "comprise" and "contain" and variations of them mean "including but not limited to" and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of the features and/or steps are mutually exclusive. The invention is not restricted to any details of any foregoing embodiments. The invention extends to any novel one, or novel combination, of the features disclosed in this specification (including any accompanying claims, abstract and drawings), or to any novel one, or any novel combination, of the steps of any method or process so disclosed.

The reader's attention is directed to all papers and documents which are filed concurrently with or previous to this specification in connection with this application and which are open to public inspection with this specification, and the contents of all such papers and documents are incorporated herein by reference.

## Claims

1. A method, comprising:
receiving, at a server, a request from a mobile device to initiate a transaction;
linking, by the server, the mobile device to a cart based on a cart identifier associated with the cart;
receiving, at the server, scanned item data from the mobile device;
adding, by the server, item details associated with the scanned item data to a transaction;
receiving, at the server, the cart identifier from a self-checkout (SCO) terminal responsive to detection of the cart identifier from a radio frequency identification (RFID) tag on the cart when the cart is within a defined range of the SCO terminal;
providing, by the server to the SCO terminal, the transaction associated with the cart identifier;
updating, by the server, a status of the transaction to indicate transfer to the SCO terminal; and
enabling completion of payment for the transaction at the SCO terminal.

2. The method of claim 1, wherein linking comprises receiving a scanned quick response (QR) code from the mobile device, the QR code corresponding to the cart identifier.

3. The method of claim 1, wherein linking comprises automatically receiving the RFID tag from the mobile device when an RFID reader of the mobile device detects the RFID tag, the RFID tag corresponding to the cart identifier.

4. The method of any preceding claim, wherein receiving the cart identifier comprises reading the RFID tag within a defined x and y coordinate space in proximity of the SCO terminal; and/or
wherein receiving the cart identifier comprises reading the RFID tag using an RFID reader positioned overhead of the SCO terminal or positioned proximate to the SCO terminal.

5. The method of any preceding claim, wherein updating comprises claiming the transaction for the SCO terminal.

6. The method of any preceding claim, wherein enabling comprises causing transaction details for the transaction to be presented simultaneously on both the mobile device and the SCO terminal; and/or
wherein enabling comprises receiving item modifications from an interface of the mobile device while the cart is at the SCO terminal.

7. The method of any preceding claim, further comprising receiving, at the server, loyalty account information in connection with the request to initiate the transaction; and/or
further comprising automatically initiating payment using payment information associated with a loyalty account.

8. The method of any preceding claim, further comprising causing a display on one or more of the SCO terminal or the mobile device of an indication of where to position the cart for transaction transfer.

9. A method, comprising:
receiving a cart identifier from a radio frequency identification (RFID) tag attached to a cart located at a self-checkout (SCO) terminal;
providing transaction data associated with the cart identifier to the SCO terminal, wherein the transaction data includes items scanned using a mobile device linked to the cart identifier;
causing the transaction data to be presented on a display of the SCO terminal; and
updating a status of a transaction indicating the transaction was transferred for completion and payment on the SCO terminal.

10. The method of claim 9, wherein receiving comprises detecting the RFID tag using an RFID reader positioned to define a specific detection zone in which the cart is located.

11. The method of claim 9 or claim 10, wherein receiving comprises automatically detecting the RFID tag using an RFID reader when the cart enters a predefined range of the SCO terminal.

12. The method of any one of claims 9 to 11, wherein providing comprises causing a real-time synchronized view of the transaction data to be presented on the mobile device and on the SCO terminal; and/or
wherein updating comprises confirming the payment for the transaction is provided through the mobile device and informing the SCO terminal of the payment to complete a self-checkout at the SCO terminal.

13. The method of any one of claims 9 to 12, further comprising receiving item modifications for the transaction through the SCO terminal before processing the payment; and/or
further comprising receiving item modifications for the transaction through the mobile device before processing the payment.

14. A system, comprising:
a radio frequency identification (RFID) tag storing a unique cart identifier, wherein the RFID tag is affixed to a cart;
an RFID reader positioned proximate to a self-checkout (SCO) terminal and configured to detect the RFID tag within a defined range of the SCO terminal;
the SCO terminal comprising:
a processor;
a display; and
a memory storing instructions that, when executed by the processor, cause the SCO terminal to:
receive transaction data associated with the unique cart identifier from a server;
display the transaction data; and
process payment for a transaction; and
the server comprising:
a processor; and
a memory storing instructions that, when executed by the processor, cause the server to:
receive a transaction initiation from a mobile device;
link the mobile device to the cart using the unique cart identifier;
build a transaction by receiving scanned item data from the mobile device;
store the transaction data associated with the unique cart identifier;
update a status of the transaction when the unique cart identifier is detected;
transfer the transaction data to the SCO terminal; and
enable completion of the transaction at the SCO terminal.

15. The system of claim 14, wherein the RFID reader is positioned above the SCO terminal or affixed to a surface of the SCO terminal, wherein the RFID reader is configured to detect the RFID tag within specific x and y coordinates mapped to an outlined area adjacent to the SCO terminal.
